## Europäisches Patentamt

## European Patent Office

## Office européen des brevets

(11) Veröffentlichungsnummer: **0 211 832**
**B1**

(12) # EUROPÄISCHE PATENTSCHRIFT

(45) Veröffentlichungstag der Patentschrift:
**22.06.88**

(51) Int. Cl.⁴: **B 22 C 9/10**, B 29 C 33/48

(21) Anmeldenummer: **85901384.9**

(22) Anmeldetag: **10.04.85**

(86) Internationale Anmeldenummer:
**PCT/DE 85/00115**

(87) Internationale Veröffentlichungsnummer:
**WO 85/04604 (24.10.85 Gazette 85/23)**

(54) **SPRITZGIESSKERN FÜR ROHRBÖGEN.**

(30) Priorität: **14.04.84 DE 3414231**

(43) Veröffentlichungstag der Anmeldung:
**04.03.87 Patentblatt 87/10**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**DE - A - 1 952 758**
**FR - A - 1 188 569**
**US - A - 3 417 601**

(73) Patentinhaber: **AGRU ALOIS GRUBER & SOHN OHG,
Grünburger Strasse 41, A-4540 Bad Hall (AT)**

(72) Erfinder: **BARAINSKY, Rudolf, Ringstrasse 5,
D-4973 Vlotho (DE)**

(74) Vertreter: **Rupprecht, Klaus, Dipl.-Ing., Am Römerhof 35,
D-6000 Frankfurt (Main) 90 (DE)**

## Beschreibung

Die Erfindung bezieht sich auf einen Spritzgiesskern für Rohrbögen mit mindestens einem geraden Endstück, welcher mindestens ein gerades Kernendteil aufweist sowie mehrere keilförmige Segmente, die über ein einenends aus der Spritzgiessform herausgeführtes, flexibles Zugelement lösbar zum Spritzgiesskern bögenförmig miteinander verbindbar sind, wobei an den Kernendteilen und den Segmenten Zentrierelemente angeordnet sind.

Es ist bekannt, dass die Herstellung von Rohrbögen mit geraden Endrohren oder engem Muffenanschluss im Spritzgiessverfahren hauptsächlich ein Problem des Werkzeugkernes darstellt, und dass mit der Technik der Kernschieber nur dann der volle Kreisquerschnitt über die ganze Länge des Bogens von beispielsweise 90° erreicht werden kann, wenn die Bedingung R ≦ ⅔D erfüllt ist, wobei R den Bogenmittelradius und D den Rohrinnendurchmesser bedeuten.

Grössere Bogenradien werden bei Verwendung sogenannter Schmelzkerne erreicht, die sich aber wegen der umständlichen Handhabung sowie der Temperaturproblematik und nicht zuletzt wegen der hohen Kosten für diesen Anwendungsbereich in der Praxis nicht eingeführt haben, zumal auch ein automatischer Lauf solcher Werkzeuge nicht sinnvoll zu realisieren ist. Letzteres gilt ebenfalls für sogenannte Einlegekerne, bei denen zusätzlich noch die Anwendungsspanne in bezug auf die Masse sehr eingeengt ist, das heisst, dass bei auch nur etwas längeren geraden Rohrendstücken von etwa 0,5 D eine einwandfreie Entformung nicht mehr gelingt.

Aus der DE-A-1 952 758 ist ein Giesskern für gekrümmte Rohre bekannt, der aus geraden Endstücken und keilförmigen Segmenten besteht.

Diese Einzelteile sind mittels eines mittig verlaufenden Zugelementes zu einem bogenförmigen Giesskern verspannbar. Darüber hinaus sind an den Segmenten und Endstücken Zentrierelemente vorgesehen.

Es hat sich gezeigt, dass der bekannte Giesskern nicht alle Ansprüche erfüllt, die an ihn angesichts eines besonders wirtschaftlichen und präzisen Herstellungsverfahrens für den zu erzeugenden Rohrkrümmer zu stellen sind. Beim Entformen des Kerns aus dem gefertigten Rohrkrümmer wird bekanntlich die durch das Zugelement aufgebrachte Vorspannung gelöst, so dass die Segmente mit Abstand zueinander angeordnet werden. Hierbei kann es auftreten, dass sie sich zumindest teilweise gegeneinander verdrehen. Die Wiederherstellung des bogenförmigen Kernes ist dann nur mit einem vergleichsweise zeitaufwendigen Ausrichten der Segmente von Hand so zueinander möglich, dass die vorgesehenen Zentrierelemente wieder miteinander fluchten. Andernfalls würde man einen nicht formgerechten Kern erhalten, der zu einem Ausschussprodukt führt. Es ist festzuhalten, dass die Segmente und Endteile im geraden, von der Vorspannung entlasteten Zustand nicht gegen Verdrehen gesichert sind.

Die Aufgabe der Erfindung besteht demgegenüber darin, einen Spritzgiesskern der eingangs genannten Art zu schaffen, der ein präzises und rationelles Arbeiten, insbesondere beim Einführen des gelösten Kerns in die Form ohne zusätzliche Manipulationen der keilförmigen Segmente ermöglicht.

Diese Aufgabe ist gemäss der Erfindung dadurch gelöst, dass mehrere Zugelemente vorgesehen sind, die an ihren aus der Spritzgiessform herausgeführten Enden an miteinander synchronisierten Bewegungselementen angeschlossen sind und dass die Zentrierelemente – in Seitenansicht gesehen – zwischen den Zugelementen vorgesehen sind.

Mit der erfindungsgemässen Massnahme des Vorsehens mehrerer Zugelemente ist ohne wesentlichen Mehraufwand auf überraschend einfache Weise das erfindungsgemässe Ziel erreicht. Mit mehreren Zugelementen, die notwendigerweise in irgendeiner Form nebeneinander angeordnet sein müssen, wird das unerwünschte Verdrehen der Segmente gegeneinander zuverlässig vermieden. Die Segmente werden beim Einführen in die Form immer einwandfrei in der erforderlichen Lage zueinander gehalten, so dass es in der Form zwangsläufig zu der richtigen Lage und Ausrichtung der Segmente zueinander kommt. Bisher erforderliche Manipulationen von Hand entfallen vollständig.

Besonders vorteilhaft ist es hinsichtlich Aufwand und Ergebnis, wenn gemäss der Erfindung zwei Zugelemente im Bereich der Hauptlängsschnittebene des Spritzkerns vorgesehen sind. In aller Regel wird das Verdrehen der Segmente gegeneinander durch bereits zwei Zugelemente zuverlässig vermieden.

Nach einem anderen Merkmal der Erfindung ist vorgesehen, dass die Bewegungselemente ein Hebelgetriebe aufweisen, an dem die freien Enden der beiden Zugelemente angeordnet sind, das über eine Spindel mit Spindelmuttern betätigbar ist. Es hat sich gezeigt, dass in einer Vielzahl von Anwendungsfällen ein derartiges, vergleichsweise einfaches Antriebssystem durchaus ausreichend ist.

Gemäss der Erfindung kann jedoch auch anstelle der Spindel und Spindelmutter eine druckmittelbetätigte Kolben/Zylinder-Anordnung vorgesehen sein. Diese Ausführungsform wird vorzugsweise über das Druckmittelsystem der Spritzgiessmaschine, an der der Spritzgiesskern zum Einsatz gelangt, angetrieben.

Ein Ausführungsbeispiel der Erfindung wird an Hand der Zeichnungen beschrieben. Darin zeigen im einzelnen:

Abb. 1 die Seitenansicht eines erfindungsgemäss gestalteten Spritzgiesskernes in gestreckter Stellung,

Abb. 2 die Seitenansicht des zum Bogenkern geordneten Spritzgiesskernes aus Abb. 1, und

Abb. 3 die Seitenansicht dieses Spritzgiesskernes während der Entformung.

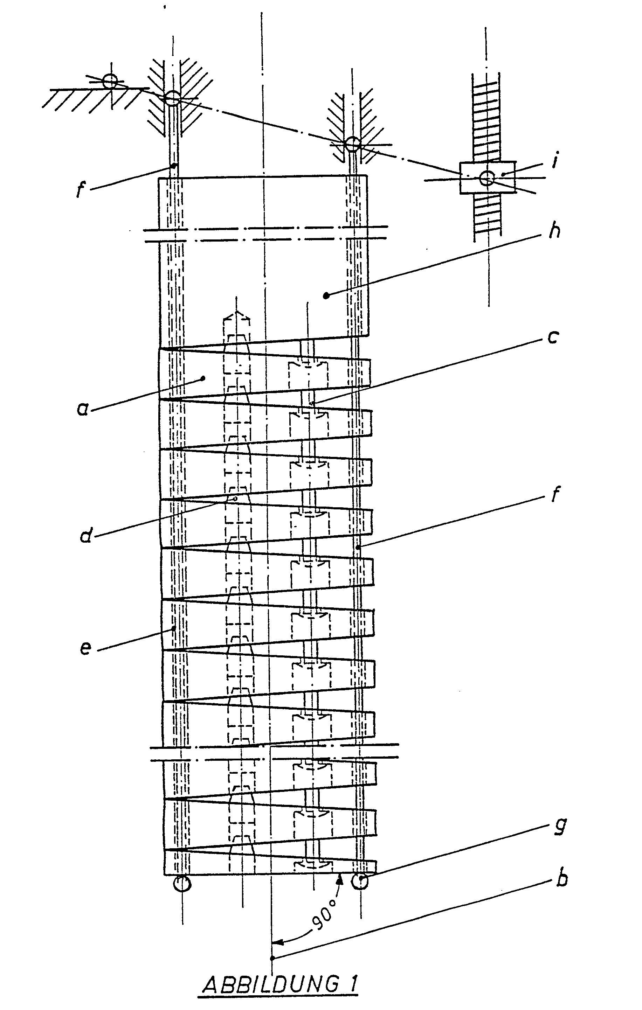

Wie Abb. 1 erkennen lässt, ist der zur Beschreibung gelangende Spritzgiesskern für Rohrbögen mit geraden Endstücken in einzelne Scheiben a senkrecht zur Mittellinie b des Bogens, und zwar vorzugsweise zwölf Teile für einen Bogen von 90°, aufgeteilt. Diese Scheiben a sind mit Hilfe pilzförmiger Ansätze c zu einer Kette miteinander verbunden. Da die einzelnen Scheiben a bedingt durch den grösseren Aussenradius und den kleineren Innenradius des Bogenkernes keilförmige Seitenansichten haben, müssen diese Ansätze c so gestaltet sein, dass bei gestreckter Kette die Mittellinie b der Scheiben a eine gerade Linie bildet. Die einzelnen Scheiben a sind ausserdem mittels konischer Zentrierstifte d gegenseitig gegen Verschieben und Verdrehen gesichert. Ferner weisen die Scheiben a jeweils eine oder mehrere Bohrungen e auf, durch die Drahtseile f als Zugelemente hindurchgeführt und über Befestigungen g mit der letzten Scheibe a des Bogenkernes verbunden sind. An seinem anderen Ende liegt die Scheibenkette am Kern h für das gerade Rohrendstück an, indem die Drahtseile f durch diesen hindurchgeführt und an ihrem Ende mit Bewegungselementen i, wie z. B. einer Spindel oder einem Hydraulikzylinder, verbunden sind.

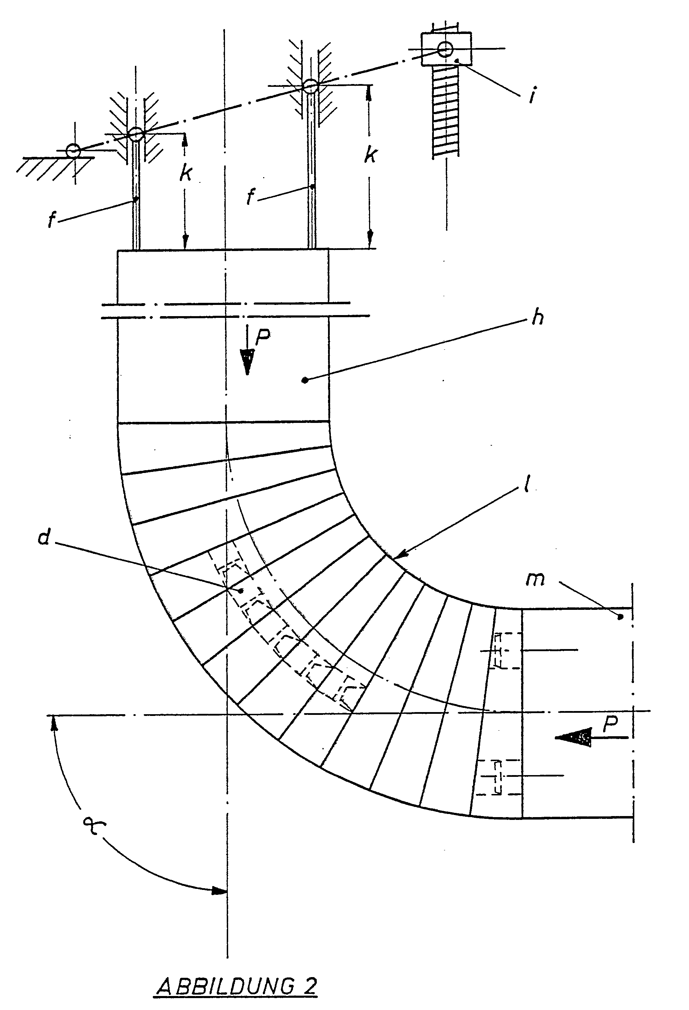

Abb. 2 stellt den Zustand der Scheibenkette dar, nachdem die Drahtseile f durch die Bewegungselemente i bis zur Endlage k gebracht worden sind. Die Scheiben a haben sich dabei gemäss ihrer Keilform zu Bogenkern 1 geordnet. Sie werden durch das Gegenfahren des für das zweite gerade Rohrenstück bestimmten Kernes m endgültig in ihrer Lage fixiert, so dass den Drahtseilen f vorwiegend der kinematische Teil der Funktionsweise zukommt, während die Verriegelung durch die Kerne h und m erfolgt. Die Zentrierstifte d oder andere geeignete Elemente verhindern das Herauspressen der Scheiben a aus dem Verband, wobei diese Elemente für eine Belastung von $P \times \cos\alpha/2$ ausreichend bemessen sind.

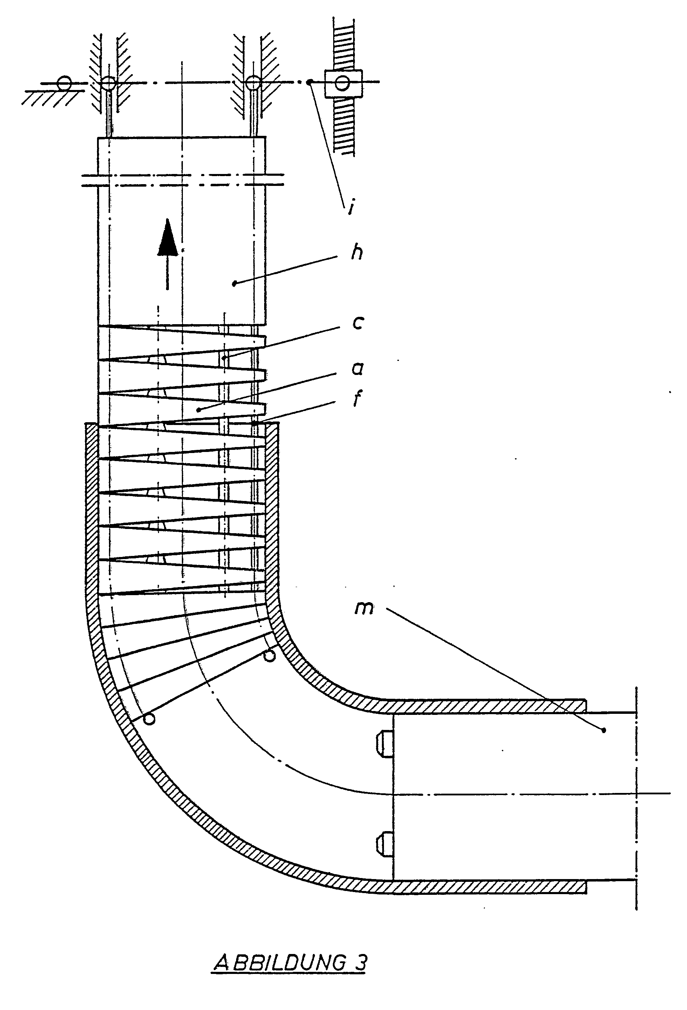

In der Abb. 3 ist der nach der Erfindung gestaltete Spritzgiesskern während des Entformungsvorganges wiedergegeben. Hierbei ist ersichtlich, dass das Herausziehen des Bogenkernes 1 synchron mit der Bewegung der Bewegungselemente i und demgemäss der Drahtseile f verläuft. Als Beispiel muss die Entformungskonizität bei einer Keilform von 7,5°=0,03% des Bogeninnenradius pro Bogengrad betragen.

## Patentansprüche

1. Spritzgiesskern für Rohrbögen mit mindestens einem geraden Endstück, welcher mindestens ein gerades Kernendteil aufweist sowie mehrere keilförmige Segmente, die über ein einenends aus der Spritzgiessform herausgeführtes, flexibles Zugelement lösbar zum Spritzgiesskern bogenförmig miteinander verbindbar sind, wobei an den Kernendteilen und den Segmenten Zentrierelemente angeordnet sind, dadurch gekennzeichnet, dass mehrere Zugelemente (f) vorgesehen sind, die an ihren aus der Spritzgiessform herausgeführten Enden an miteinander synchronisierte Bewegungselemente (i) angeschlossen sind, und dass die Zentrierelemente (c, d), — in Seitenansicht gesehen — zwischen den Zugelementen (f) vorgesehen sind.

2. Spritzgiesskern nach Anspruch 1, dadurch gekennzeichnet, dass zwei Zugelemente (f) im Bereich der Hauptlängsschnittebene des Spritzgiesskerns vorgesehen sind.

3. Spritzgiesskern nach Anspruch 1 oder 2, dadurch gekennzeichnet, dass die Bewegungselemente (i) ein Hebelgetriebe aufweisen, an dem die freien Enden der beiden Zugelemente (f) angeordnet sind, das über eine Spindel mit Spindelmutter betätigbar ist.

4. Spritzgiesskern nach Anspruch 3, dadurch gekennzeichnet, dass anstelle der Spindel und Spindelmutter eine druckmittelbetätigte Kolben/Zylinder-Anordnung vorgesehen ist.

## Claims

1. Injection moulding core for pipe bends with at least one straight terminal portion which core has at least one straight core terminal portion as well as a multiplicity of wedge-shaped segments which are connected releasably and curved by means of a flexible tension element extending from one end of the injection moulding form to provide the injection moulding core, whereby centering elements are provided on the core end portions and segments, characterized in that a plurality of tension elements (f) are provided, being connected with their ends extending from the injection moulding form to displacement elements (i) which in turn are synchronised together, and that the centering elements (c, d), are provided — viewed in side elevation — between the tension elements (f).

2. Injection moulding core according to claim 1, characterized in that two tension elements (f) are provided adjacent the main longitudinal cross-section plane of the injection moulding core.

3. Injection moulding core according to claim 1 or 2, characterized in that the displacement elements (i) are provided with a lever gear, to which the free ends of both tension elements are attached, wherein the lever gear can be actuated by means of a spindle with spindle nut.

4. Injection moulding core according to claim 3, characterized in that a pressure fluid actuated piston/cylinder arrangement is provided instead of the spindle and spindle nut.

## Revendications

1. Noyau d'injection pour tubes coudés avec au moins une extrémité droite, comportant au moins une partie de noyau droit ainsi que plusieurs segments en forme de coins qui sont susceptibles d'être reliés de manière amovible par un élément de traction souple sortant du moule d'injection, pour être réunis en forme de coudes, des éléments de centrage étant prévus sur les parties d'extrémité du noyau et sur les segments, noyau caractérisé en ce qu'il comporte plusieurs éléments de traction (f) dont les extrémités sortant du moule d'injection sont reliées à des éléments (i) à mouvement synchronisé et en ce que les éléments de centrage (c, d) (en vue de côté) sont prévus entre les éléments de traction (f).

2. Noyau d'injection selon la revendication 1, caractérisé par deux éléments de traction (f) au niveau du plan de coupe longitudinal principal du noyau d'injection.

3. Noyau d'injection selon l'une des revendications 1 ou 2, caractérisé en ce que les éléments de déplacement (i) comportent une transmission à levier dont les extrémités libres portent les deux éléments de traction (f) et qui peut être actionnée par une broche avec un écrou à broche.

4. Noyau d'injection selon la revendication 3, caractérisé par un dispositif à cylindre et piston à fluide sous pression remplaçant la broche et l'écrou à broche.

*ABBILDUNG 1*

_ABBILDUNG 2_

*ABBILDUNG 3*